# EUROPÄISCHE PATENTSCHRIFT

(11) **EP 0 580 893 B1**
(45) Veröffentlichungstag und Bekanntmachung des Hinweises auf die Patenterteilung: **04.02.1998**
(21) Anmeldenummer: 92113108.2
(22) Anmeldetag: 31.07.1992
(51) Int. Cl.: H04M 3/30, H04Q 11/04

(54) **Prüfverfahren zur Teilnehmer-Anschlussprüfung**
Test method for testing a subscriber connection
Méthode de test pour tester un raccordement d'abonné

(43) Veröffentlichungstag der Anmeldung: 02.02.1994
(73) Patentinhaber: SIEMENS AKTIENGESELLSCHAFT, 80333 München (DE)
(72) Erfinder: Renger, Wolfgang, Dipl.-Ing., W-8000 München 21 (DE); Zeitz, Gerald, W-8000 München 83 (DE)

(56) Entgegenhaltungen:
- IEEE GLOBAL TELECOMMUNICATIONS CONFERENCENEW ORLEANS(US) Bd. 3/3, 2. Dezember 1985, Seiten 4061 - 4065 C.AUGENSTEIN ET AL 'MAN-MACHINE INTERFACE FOR SIEMENS EWSD'
- TELCOM REPORT Bd. 8, Nr. 1, Januar 1985, MUNCHEN DE Seiten 25 - 31 BERT EISL ET AL 'STEUERUNGSKONZEPT DER INTEGRIERTEN PRUFTECHNIK FUR DIE EWSD-PERIPHERIE'

## Beschreibung

Die Erfindung betrifft ein Prüfverfahren gemäß Oberbegriff des Patentanspruchs 1.

Ein funktionssicherer Telekommunikationsanschluß ist eine wichtige Voraussetzung dafür, daß ein Telekommunikationsteilnehmer die Dienste und Dienstmerkmale eines Telekommunikationsnetzes bzw. Telekommunikationssystems zuverlässig nützen kann. Die für ein in einem Telekommunikationssystem integrierten Teilnehmeranschlußprüfsystem nötigen Hard- und Softwaremodule sind jeweils in diesem implementiert. Im einzelnen können mit den systemintegrierten elektronischen Hard- und Softwaremodulen prozessorgesteuert Prüfprozeduren, wie z. B. eine Qualitätsanalyse, Fehlererkennung, Fehlerdiagnose oder eine Fehlerlokalisierung in einer Teilnehmerschaltung/Teilnehmersatzbaugruppe oder an einer Teilnehmerleitung mit Teilnehmerendgerät durchgeführt werden. Darüber hinaus ermöglicht das Teilnehmeranschlußprüfsystem des Telekommunikationssystems einen automatischen, über einen Telekommunikationsanschluß angestoßenen Prüfablauf. Die oben aufgeführten systemintegrierten Teilnehmeranschlußprüfungen werden durch eine Betriebssoftware eines Prozessors gesteuert. Dieser Prozessor ist auf einer Anschlußgruppe angeordnet, die zwischen einem Koppelnetz und einer Teilnehmerleitungseinheit eines Telekommunikationssystems integriert ist.

Während einer systemintegrierten Teilnehmeranschlußprüfung werden eine Vielzahl unterschiedlichster Prüfprozeduren, durch Anreize angestoßen, wie beispielsweise:
- Aufnahme von Kommandos von einem Koordinationsprozessor
- Senden von Meldungen an einem Koordinationsprozessor
- Prüfzugriff auf einen Prüfling (z. B. Teilnehmerschaltung, Teilnehmerleitung mit Teilnehmerendgerät) schalten
- Prüfeinrichtung belegen, und
- Prüfung durchführen.

Die Prüfprozeduren einleitenden und ausführenden Programmmodule können unterschiedlich ausgeprägt sein, da die Telekommunikationssysteme bzw. Telekommunikationsnetze unterschiedlichen Anforderungen angepaßt sowie länderspezifisch und teilnehmerindividuell ausgestaltet sein können. Durch die Prüfprozeduren werden eine Vielzahl von unterschiedlich ausgeprägten Hardwaremodulen geprüft. Wegen der unterschiedlichen Ausprägung der Hardwaremodule müssen Prüfprogrammschritte und Entscheidungskriterien in den Prüfprogrammodulen ergänzt oder Prüfprozeduren den jeweiligen Hardwaremodulen angepaßt werden.

Prüfgrenzwerte zur Klassifizierung von Prüfmeßwerten werden nach der Art der Messung, der Art der Teilnehmeranschlußleitung und der Teilnehmerendgeräte benötigt und in länderspezifischen Prüfprogrammodulen abgespeichert. Bei ihrer Bestimmung werden u. a. Teilnehmeranschluß-Parameter, wie z. B. Kapazitäts-, Gleichspannungs- und Widerstandswerte, berücksichtigt. Eine länderspezifische Ausprägung der Prüfgrenzwerte wird durch die im Telekommunikationssystem verwendeten Hardwaremodule und den Anforderungen an das Telekommunikationssystem der jeweiligen Telekommunikationsgesellschaften bestimmt, wobei die in die Programmodule einzusetzenden Prüfgrenzwerte von einer Vielzahl von einzelnen Faktoren abhängen, z. B.:
- Speisenetzwerk der Teilnehmerschaltung,
- Amtsspannung,
- Eingangsimpedanz der Teilnehmerschaltung sowie der
- Dämpfung des Sende-/Empfangspegels.

Darüber hinaus muß bei der Realisierung und beim Ablauf der Prüfprozeduren sowie bei der Bestimmung der Prüfgrenzwerte auf Kundenwünsche eingegangen werden.

Durchzuführende Prüfprozeduren können je nach der Art des "Prüflings", z. B. einen Teilnehmeranschluß, eine digitale oder analoge Teilnehmerleitungseinheit, in wenigstens zwei Prüfalgorithmen eingeteilt werden. Ein erster Prüfalgorithmus beinhaltet die Prüfung von Teilnehmerschaltung und ein zweiter Prüfalgorithmus beeinhaltet die Prüfung der Teilnehmerleitung mit Teilnehmerendgerät. Während des Ablaufs der Prüfalgorithmen wird ein ermittelter Prüfmeßwert jeweils mit einem oberen und einem unteren Prüfgrenzwert verglichen, um daran anschließend eine Prüfgüteklasseneinteilung vorzunehmen (Gut-/Schlechtaussage). Kundenwünsche bezüglich Änderungen eines Ablaufs eines Prüfalgorithmus nach einer Implementierung der Prüfprogrammmodule oder einer Anpassung der Prüfprogrammodule an eine individuelle Leitungsausgestaltung waren bisher mit einem hohen Arbeitsaufwand verbunden.

Eine länderspezifische Prüfgrenzwertanpassung oder eine kundenindividuelle Prüfgrenzwertanpassung bei einer Teilnehmeranschlußprüfung erforderte eine umfangreiche, softwaremäßige Anpassungsarbeit in den jeweiligen Prüfprogrammodulen. Die softwaremäßigen Anpassungsarbeiten führten jedoch zu einer Vielzahl von Variantenbildungen eines Prüfprogrammoduls und jedesmal zu einem großen Dokumentationsaufwand bei den erstellten Prüfprogrammodulen. Eine Veränderung von Prüfgrenzwerten für eine individuelle Teilnehmerleitungsprüfung war bisher nicht möglich, auch konnte bei einer Teilnehmerleitungsprüfung nachträglich nicht auf Kundenwünsche bezüglich einer Prüfgrenzwertanpassung eingegangen werden. Eine prüftechnische Anpassung nach einer Systemveränderung oder einer Modernisierung der länderspezifisch ausgeprägten Teilnehmerleitungsprüfung erforderte darüber hinaus einen großen Programmieraufwand. Eine über eine "Gut"- oder "Schlecht"-Aussage hinausreichende Klassifizierung der Prüfmeßwerte, z. B. bei der Teilnehmerleitungsprüfung, hinsichtlich einer Qualitätsaussage über einen "Prüfling" war bisher nicht möglich.

Fehler in den Prüfprogrammabläufen erforderten jeweils eine individuelle Korrektur per Patch.

Der Erfindung liegt die Aufgabe zugrunde, ein Prüfverfahren so auszugestalten, daß dieses unabhängig von länderspezifischen Einsatzgebieten und Systemkomponenten eines Telekommunikationsanschlusses einsetzbar ist.

Diese Aufgabe wird erfindungsgemäß durch die im Kennzeichen des Patentanspruchs 1 genannten Merkmale gelöst. Der wesentlichste Vorteil des erfindungsgemäß realisierten Prüfverfahrens liegt darin, daß dieses vollkommen länderunabhängig ausgebildet ist. Die bisher verwendeten Prüfprogrammodule können in jedem Land nach einer programmtechnischen Umstrukturierung weiter verwendet werden. In einen Prüfalgorithmus kann darüber hinaus jede zu prüfende Teilnehmeranschluß-Schaltungsvariante problemlos ohne einen nennenswerten Programmieraufwand im Prüfalgorithmus integriert werden.

Aufgrund fein abgestimmter Prüfgrenzwerte sowie dazu gehörender Prüfgüteklassen ergibt sich eine genaue Qualitätsaussage über einen Leitungszustand.

Die Erfindung bringt zusätzlich neben dem Vorteil, daß eine länderspezifische Anpassung des Prüfprogrammalgorithmus jederzeit durchgeführt werden kann, den zusätzlichen Vorteil mit sich, daß der bisher anfallende Dokumentationsaufwand zu den einzelnen Prüfprogrammodulen entfällt.

Eine weitere Ausgestaltung der Erfindung ist, daß die die Prüfmeßwertdaten klassifizierenden Prüfgrenzwerte einer teilnehmerindividuellen Leitungs- oder Schaltungsanordnung den sich ändernden schaltungstechnischen Anforderungen anpaßbar sind. Dies bringt den Vorteil mit sich, daß der Betreiber einer Telekommunikationsanlage bzw. Vermittlungseinrichtung die Prüfgrenzwerte jederzeit den Veränderungen des Telekommunikationsnetzes anpassen kann. Ebenso können neu definierte Gütekriterien sofort vom Betreiber einer Telekommunikationsanlage als Grundlage neuer Qualitätsaussagen in die Prüfprozeduren eingeführt werden.

Eine weitere vorteilhafte Ausgestaltung der Erfindung besteht darin, daß bei einer Änderung der länderspezifisch und teilnehmerindividuell ausgeprägten Prüfgrenzwerte, diese zentral in einem Prüfdatenprogrammodul vorgenommen werden können. Eine zusätzliche Prüfprogrammdokumentation anderer, in den Prüfalgorithmus beteiligter Prüfmodule ist nicht notwendig, da die bisher in der Prüfprozedur integrierten Prüfprogrammodule nicht verändert werden müssen.

Vorteilhafte Weiterbildungen der Erfindung sind in den Unteransprüchen angegeben.

Anhand der Zeichnungen soll im folgenden ein Ausführungsbeispiel der Erfindung erläutert werden.

Es zeigen:
- FIG 1: eine schematische Darstellung eines Prüfsystems in Form eines Blockschaltbildes,
- FIG 2: die an einem Prüfverfahren beteiligten Prüfprogrammodule,
- FIG 3: ein Ablaufdiagramm zur Veranschaulichung von Prüfprogrammschritten während einer Teilnehmeranschluß-Prüfung, und
- FIG 4 a/b: ein Ablaufdiagramm zur Veranschaulichung von Prüfprogrammschritten anhand einer Teilnehmerleitungs-Prüfung.

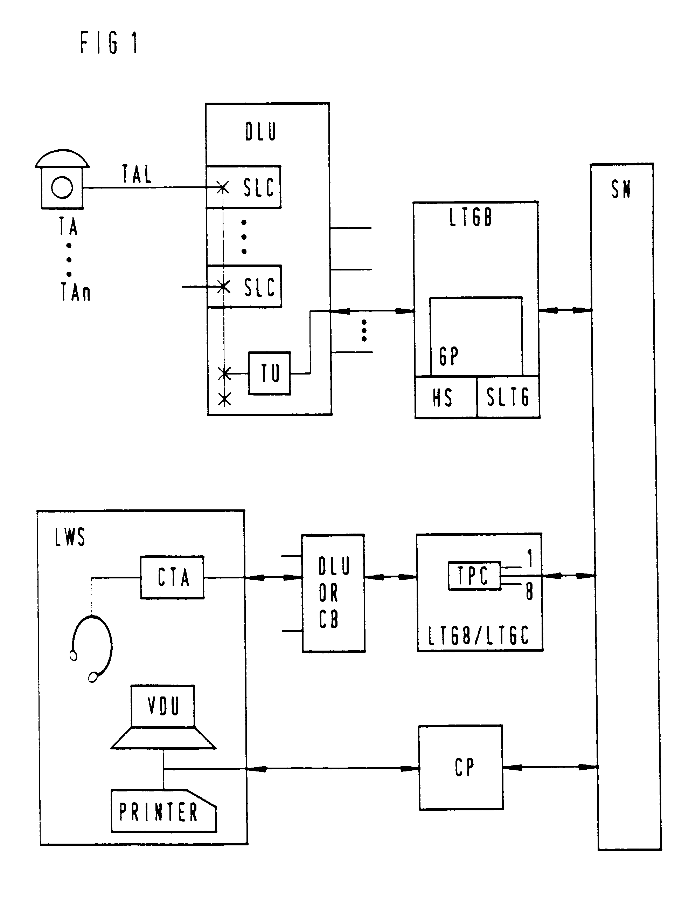

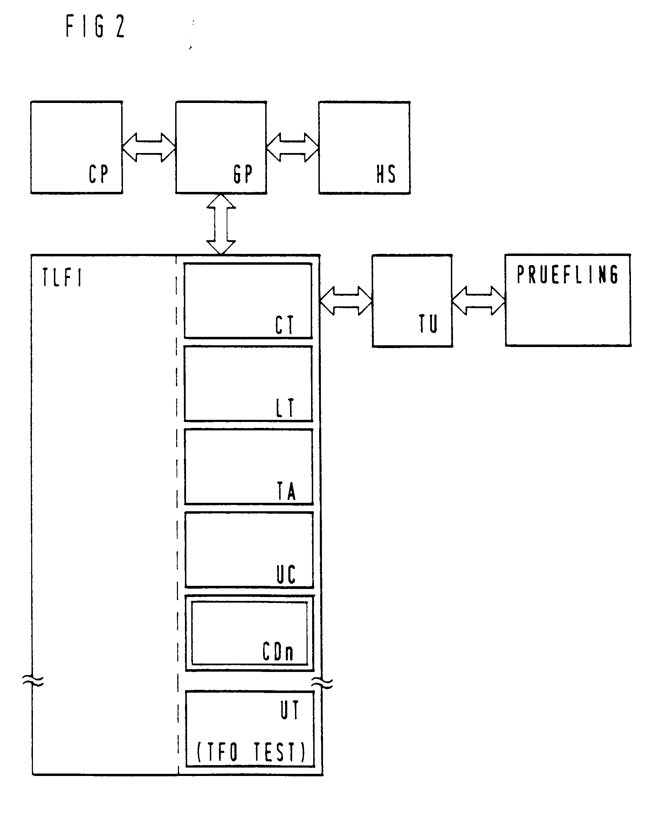

FIG 1 zeigt eine schematische Darstellung eines Test-/Prüfsystems in Form eines Blockschaltbildes. Die Prüfung einer Teilnehmerschaltung/Teilnehmersatzbaugruppe - kann dabei von einem Teilnehmeranschluß-Prüfplatz LWS gestartet werden. Eine Teilnehmeranschluß-Prüfung TA, eventuell mit Teilnehmerendgerät, kann über einen sogenannten Ring Back-Service RBS über das Bedienterminal oder über den Teilnehmer-Prüfplatz LWS angestoßen werden. Der Ring Back-Service dient einem Wartungstechniker als automatischer Prüfplatzpartner zum Prüfen von Teilnehmeranschlußleitungen TAL und Teilnehmeranschlüssen TAn. Wird eine Teilnehmerschaltung/ Teilnehmersatzbaugruppe TS/TL, eine Teilnehmerleitung TAL mit Teilnehmerendgerät geprüft, so wird durch Eingabe eines Prüfbefehls, z. B.: TEST DLULC (Teilnehmerschaltung) oder TEST SUB (Teilnehmerleitung), am Terminal VDU des Telekommunikationssystems EWSD ein Prüfalgorithmus angestoßen. Ein Koordinationsprozessor CP übergibt einen Prüfauftrag an einen für die Teilnehmerleitungseinheit DLU zuständigen Gruppenprozessor GP, der auf einer Anschlußbaugruppe LTGB angeordnet ist. Den Verbindungsaufbau zu einer Prüfeinheit TU wird vom Gruppenprozessor GP gesteuert, zu dessen Bereich die zu prüfende Teilnehmer-/Teilnehmerleitungseinheit ("Prüfling") schaltungstechnisch zugerechnet ist. Im Gruppenprozessor GP ist ein zentrales Prüfsteuerprogrammodul TLFI implementiert, das jeweils die Prüfprogrammodule UC, CT, TA, LT, CD ... (nähere Erläuterungen zu den Prüfprogrammodulen siehe FIG 2 und dazugehörige Beschreibung) ansteuert, wobei jeweils drei byteweise Datenwörter aus diesen ausgelesen werden.

FIG 2 zeigt die an dem Prüfverfahren beteiligten Prüfprogrammodule UC, UT, TA, CT, LT, CD1...CDn, ... . Prüftabellen, Prüfgrenzwerte sowie Prüfabläufe werden in Prüfprozeduren einleitende sowie ausführende Prüfalgorithmen eingebunden. Diese Prüfprozeduren ausführende Programmodule sind nachfolgend aufgeführt:
- Prüfentscheidungsprogrammodul UC
   Dieses Programmodul überprüft, ob die zu testenden Hardwaremodule systemkonform in die Kommunikations- oder Vermittlungsanlage integriert sind und entscheidet über die Durchführung der Tests der Sonderfunktionen einer Teilnehmerbaugruppe.
- Prüfdatenprogrammodul CD
   Dieses Programmodul ist länderabhängig ausgeprägt. Alle zu einer Prüfprozedur (Teilnehmersatzprüfung) notwendigen Prüfgrenzwerte und Entscheidungskriterien sind in Gruppen eingeordnet und in dem Prüfprogrammodul CD vermerkt.
- Erstes Prüfablaufprogrammodul CD
   Dieses Prüfprogrammodul enthält Prüftabellen für die Prüfung der Teilnehmerschaltung TS und die Prüfeinheit TU.
- Zweites Prüfablaufprogrammodul LT
   Dieses Programmodul enthält Prüftabellen für die Tests der Teilnehmerleitung TL.
- Prüfadreßprogrammodul TA
   Dieses Programmodul enthält Adressen für alle Prüftabellen, die in dem ersten und zweiten Prüfablaufprogrammodul CT, LT vermerkt sind.

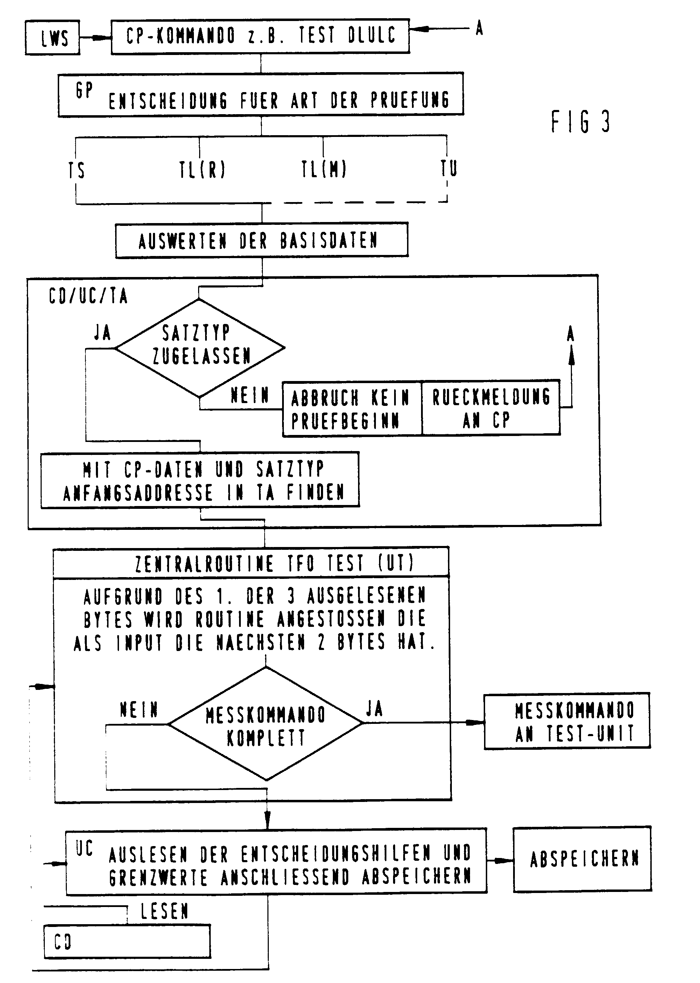

FIG 3 zeigt ein Ablaufdiagramm zur Veranschaulichung von Prüfprogrammschritten während einer Teilnehmeranschluß-Prüfung. Alle bisher vorgekommenen Grenzwerte und alle Entscheidungskriterien werden in Gruppen geordnet und in einem länderspezifischen Prüfprogrammodul CD abgelegt. Die Prüftabellen im ersten Prüfablaufprogrammodul CT legen lediglich den Ablauf und die Reihenfolge der Tests fest. Die Routinen in den Prüfentscheidungsprogrammodulen UC und UT adressieren aufgrund der entsprechenden Entscheidungskriterien den richtigen Prüfgrenzwert im Prüfprogrammodul CD. Im Prüftabellenprogrammodul TA sind die Anfangsadressen aller Prüfprozeduren für die Teilnehmerschaltungen TS vorgesehen. Welche Teilnehmerschaltungen im entsprechenden Land tatsächlich eingesetzt werden, wird u. a. aufgrund der Entscheidungskriterien festgestellt. Ein Betreiber einer Telekommunikationsanlage EWSD kann über das Bedienterminal VDU an einen Koordinationsprozessor CP ein Prüfkommando absenden (z. B. TEST DLULC). Durch das Prüfkommando wird einem Gruppenprozessor GP mitgeteilt, welche Art von einem Prüfprogrammalgorithmus TS, TL(R), TL(M) oder TU durchgeführt werden soll. Nach einer ersten "Grobeinstellung" werden die für die Prüfroutine maßgebenden, im Telekommunikations- oder Vermittlungssystem vermerkten Basisdaten, wie z. B. Portnumber, Hardwaremodule Type, mit den im Prüfprogrammodul CD vermerkten Daten verglichen.

Wird aufgrund des Datenvergleichs z. B. festgestellt, daß die zu prüfende Teilnehmerersatzschaltung TS nicht im Prüfprogrammodul vermerkt ist, so erfolgt ein Abbruch der Prüfprozedur und eine Rückmeldung an den Koordinationsprozessor CP. Für den Betreiber der Vermittlungseinrichtung oder der Kommunikationsanlage kann dies ein erster Hinweis darauf sein, daß nachträglich Hardwaremodule in das Kommunikationssystem eingefügt oder unberechtigt betrieben werden. Diese Aussage ist besonders dann wertvoll, wenn systemkonforme Hardwaremodule eingesetzt wurden und nicht den technischen Anforderungen genügen. Erfolgt eine positive Aussage über das zu prüfende Hardwaremodul, so wird aufgrund der Daten vom Koordinationsprozessor CP und des Satztyps, z. B. SLM:COS (Teilnehmeranschlußbaugruppe analog: für Normalteilnehmer), SLM:CMRL (Teilnehmeranschlußbaugruppe analog: Zählimpulseinspeisung) ..., die Anfangsadresse in dem Prüfadressenprogrammodul TA für die Prüftabellen, die in den ersten Prüfablaufprogrammodul CT vermerkt ist, ermittelt. Aufgrund einer in der Betriebssoftware implementierten Zentralroutine TFO TEST wird ein erstes von drei auszulesenden Bytes interpretiert und eine Routine angestoßen mit Input der nächsten zwei Bytes. Auf diese Art und Weise werden aus dem länderabhängigen Prüfdatenprogrammodul CD aufgrund entsprechender Entscheidungskriterien die dazugehörigen Prüfgrenzwerte ausgelesen und zwischengespeichert. Die im Prüftabellenprogrammodul TA vermerkten Anfangsadressen aller Prüfprogrammroutinen sind auf eine dem jeweiligen Telekommunikationssystem EWSD oder Vermittlungstechnik einsetzbaren Varianten der Teilnehmerschaltung begrenzt. Welche Teilnehmerschaltung TS tatsächlich in dem Telekommunikationssystem eingesetzt ist, wird aufgrund der Entscheidungskriterien (z. B. Speisenetzwerk, Amtsspannung, Eingangsimpedanz und Sende-/Empfangspegel) festgestellt. Die Zentralprüfroutine TFO TEST liest solange aus einem Prüfablaufprogrammodul CT drei Byte aus, bis alle für ein Meßkommando nötigen Daten in einem Hintergrundspeicher HS zwischengespeichert sind und ein Meßkommando an die Prüfeinheit TU erfolgt ist. Ein ermittelter Prüfmeßwert wird mit einem klassifizierenden Prüfgrenzwert PG verglichen, bei einer Schlechtaussage wird dieser Prüfmeßwert PM an einem Terminal VDU angezeigt und/oder über ein Druckerprotokoll eines Prüfplatzes ausgegeben.

Nach einer Bewertung des Prüfmeßwertes PM liest die Zentralprüfroutine TFO TEST in einer Art "Endlosschleife" aus dem Prüfablaufprogrammodul CT weitere drei Byte aus. Aufgrund der im Prüfablauf festgelegten Reihenfolge können eine Mehrzahl von Prüfungen ausgeführt werden. Folgende Prüfmessungen zum Test einer Teilnehmerschaltung TS können durch das Prüfablaufprogramm durchgeführt werden:
- Messung der An- und Abschaltung der Rufspannung,
- Messung der Speisespannung unbelastet,
- Messung der Speisespannung belastet im hochohmigen Zustand,
- Messung der Speisespannung belastet im niederohmigen Zustand,
- Prüfung der Erdschlußerkennung,
- Prüfung der Schleifenerkennung,
- Messung der Durchgangsdämpfung analog/digital,
- Messung der Durchgangsdämpfung digital/analog,
- Messung des Ruhegeräusches,
- Messung der Gabelsperrdämpfung,
- Messung der Symmetrie der Speisebrücke.

Zusätzliche Prüfschritte sind bei den Teilnehmerschaltungen TS mit Sonderfunktionen durchzuführen:
- Messung der Gebührenimpulse,
- Test der Funktion "Umpolen",
- Test der Funktion "geräuschfrei Umpolen",
- Test der Funktion "Speiseunterbrechung".

Bei einer Eigenprüfung der Prüfeinheit TU werden durch das Prüfablaufprogrammodul CT folgende Prüfungen durchgeführt:
- Test der Abschaltung aller Indikatoren,
- Test auf Ansprechen aller Indikatoren,
- Test aller Meßkreise für die Messung von Gleichspannung, Wechselspannung, Kapazität und Widerstand,
- Test des Pegelsenders und Pegelempfängers.

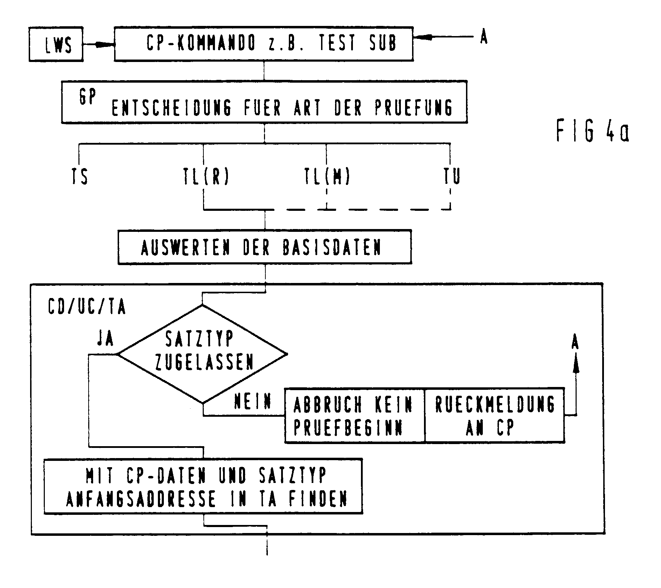

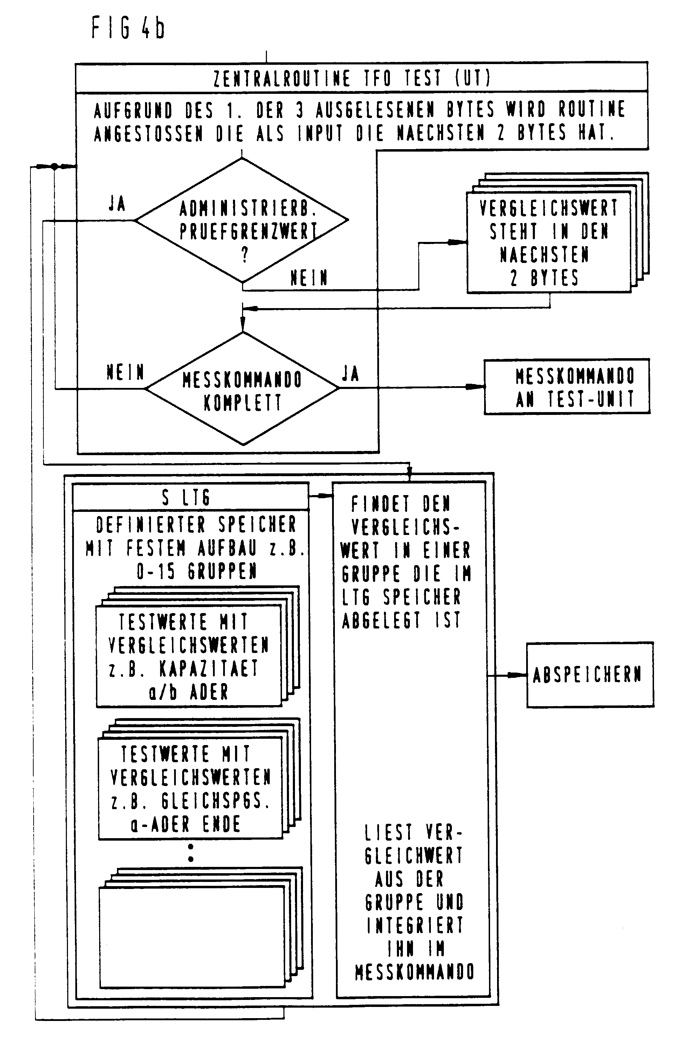

FIG 4 zeigt ein Ablaufdiagramm zur Veranschaulichung von Prüfprogrammschritten während einer Teilnehmerleitungsprüfung TL. Der Prüfprogrammablauf bei einer Teilnehmerleitungsprüfung unterscheidet sich von dem Prüfprogrammablauf einer Teilnehmerschaltungsprüfung dahingehend, daß anhand der Daten vom Koordinationsprozessor CP an den Gruppenprozessor GP ein zweites Prüfablaufprogrammodul LT angestoßen wird, wobei vor Beginn einer Prüfroutine eine Abfrage nach einem "administrierten" Prüfmeßwert erfolgt. Wird die Abfrage mit einem Nein beantwortet, so werden von der Zentralprüfroutine TFO TEST die nächsten zwei Bytes, die den Prüfgrenzwert angeben, ausgelesen. Wenn die Abfrage mit Ja beantwortet wird, kann der entsprechende Prüfgrenzwert aus einem fest definierten Speicherbereich SLTG einer Anschlußgruppe LTG ausgelesen werden. Diese länderunabhängigen Anordnungen der Prüfgrenzwerte sind besonders von Vorteil, da der Betreiber eines Telekommunikationsnetzes eigene Vorstellungen über die Höhe eines Prüfgrenzwertes in einer bestimmten Prüfgütegruppe hat. Der Betreiber des Telekommunikationsnetzes hat dabei die Möglichkeit, über ein Softwarekommando (Man-Machine-Language: MML-Kommando) diese Prüfgrenzwerte selbst in einem dafür fest zugewiesenen Speicherbereich SLTG in der Anschlußgruppe LTG abzuspeichern. Den unterschiedlichen Leistungstypen eines Telekommunikationsnetzes können eine Vielzahl von unterschiedlichen Gütegruppen und Prüfgrenzwerten zugeordnet werden.

Der Betreiber hat dabei die Möglichkeit, jeden einzelnen Prüfgrenzwert in jeder Prüfgruppe zu verändern. Wenn kein spezieller Prüfgrenzwert eingerichtet ist, ist er mit den Meßgrenzen der Testbaugruppe TU initialisiert.

## Patentansprüche

1. Prüfverfahren zur Teilnehmeranschlußprüfung (TS, TL) in einer programmgesteuerten variantenspezifisch einstellbaren Kommunikationsanlage oder Vermittlungseinrichtung, bei dem von wenigstens einem Prüfablaufprogrammodul (CT, LT) Prüfprozeduren selektiert und durchgeführt werden und bei dem zur Klassifizierung von ermittelten Prüfmeßwertdaten (PM) hinterlegte, variantenindividuelle Prüfgrenzwerte herangezogen werden,
**dadurch gekennzeichnet,**
daß aus einem Prüfdatenprogrammodul (CD) variantenindividuelle Abfragesequenzen im Sinne eines Entscheidungsbaumes zur Identifikation von Prüfgrenzwerten ausgelesen werden und daß in Abhängigkeit von den bei Abarbeitung der Abfragesequenzen gebildeten Identifikationen auf im Prüfdatenprogrammodul (CD) hinterlegte Prüfgrenzwerte zugegriffen wird.

2. Prüfverfahren nach Anspruch 1,
**dadurch gekennzeichnet,**
daß dieses zwischen externen und internen Teilnehmereinrichtungen unterscheidend Prüfvorbereitungen durchführt und Prüfmeßkommandos an eine Prüfeinheit (TU) weiterleitet.

3. Prüfverfahren nach Anspruch 1,
**dadurch gekennzeichnet,**
daß ein zentrales Prüfsteuerprogrammodul (TLFI) Zugriff auf die Prüfprogrammodule hat.

4. Prüfverfahren nach Anspruch 1,
**dadurch gekennzeichnet,**
daß Prüfprogrammoduldaten, insbesondere Teilnehmersatztypen, Ursprungsadressen, Entscheidungskriterien, Prüfgrenzwerte sowie Daten eines Koordinationsprozessors (CP), in einem Hintergrundspeicher (HS) zwischengespeichert werden.

5. Prüfverfahren nach Anspruch 1,
**dadurch gekennzeichnet,**
daß die Entscheidungskriterien aus länderabhängigen Systemdaten der Kommunikationsanlage oder Vermittlungseinrichtung (EWSD) gebildet werden.

6. Prüfverfahren nach Anspruch 1,
**dadurch gekennzeichnet,**
daß die die Prüfmeßwertdaten klassifizierenden Prüfgrenzwerte länderspezifisch in der programmgesteuerten Kommunikationsanlage bzw. Vermittlungseinrichtung (EWSD) anpaßbar sind.

7. Prüfverfahren nach Anspruch 1,
**dadurch gekennzeichnet,**
daß die die Prüfmeßwertdaten (PM) klassifizierenden Prüfgrenzwerte (PG) einer ausgeprägten teilnehmerindividuellen Leitungsanordnung verstellbar vorgegeben sind.

8. Prüfverfahren nach Anspruch 1,
**dadurch gekennzeichnet,**
daß das erste Prüfablaufprogrammodul (CT) auf Basisdaten eines Kommunikationssystems zugreifen kann und eine vergleichende Prüfprozedur mit Systemdaten aus dem Prüfdatenprogrammodul (CD) durchführt.

9. Prüfverfahren nach Anspruch 8,
**dadurch gekennzeichnet,**
daß die Basisdaten Teilnehmerdaten sind.

## Claims

1. Test method for subscriber connection testing (TS, TL) in a program-controlled communications system or switching device which can be set in a variant-specific manner, in the case of which test procedures are selected and carried out by at least one test sequence program module (CT, LT) and in which stored, variant-specific test limit values are used to classify determined test measured value data (PM), characterized in that variant-specific interrogation sequences are read from a test data program module (CD) in the sense of a decision tree for identification of test limit values, and in that test limit values stored in the test data program module (CD) are accessed as a function of the identification information formed during processing of the interrogation sequences.

2. Test method according to Claim 1, characterized in that this method carries out test preparations differently for external and internal subscriber devices and passes on test measurement commands to a test unit (TU).

3. Test method according to Claim 1, characterized in that a central test control program module (TLFI) has access to the test program modules.

4. Test method according to Claim 1, characterized in that test program module data, in particular subscriber equipment types, origin addresses, decision criteria, test limit values and data from a coordination processor (CP)' are buffer-stored in a backup memory (HS).

5. Test method according to Claim 1, characterized dependent system data of the communications system or switching device (EWSD).

6. Test method according to Claim 1, characterized in that the test limit values which classify the test measured value data can be matched in a state-specific manner in the program-controlled communications system or switching device (EWSD).

7. Test method according to Claim 1, characterized in that the test limit values (PG) which classify the test measured value data (PM) are predetermined adjustably for a particular subscriber-specific line arrangement.

8. Test method according to Claim 1, characterized in that the first test sequence program module (CT) can access basic data in a communications system and carries out a comparative test procedure using system data from the test data program module (CD).

9. Test method according to Claim 8, characterized in that the basic data are subscriber data.

## Revendications

1. Procédé de vérification pour la vérification (TS, TL) de raccordement d'abonné dans une installation de communication ou un dispositif de commutation commandé par programme et réglable de manière spécifique à des variantes, dans lequel des procédures de vérification sont sélectionnées et exécutées par au moins un module (CT, LT) de programme de déroulement de vérification et dans lequel on utilise pour la classification de données (PM) de valeurs de mesure de vérification obtenues des valeurs limites de vérification mises en mémoire, spécifiques aux variantes, caractérisé en ce que des séquences d'interrogation spécifiques à des variantes sont lues dans le module (CD) de programme de données de vérification en vue de créer un arbre de décisions pour identifier des valeurs limites de vérification et en ce que, en fonction des identifications formées lors du traitement des séquences d'interrogation, on accède à des valeurs limites de vérification mises en mémoire dans le module (CD) de programme de données de vérification.

2. Procédé de vérification suivant la revendication 1, caractérisé en ce que ce procédé effectue des travaux préparatoires distinguant des dispositifs d'abonnés externes de dispositifs d'abonnés internes et retransmet des instructions de mesure de vérification à une unité (TU) de vérification.

3. Procédé de vérification suivant la revendication 1, caractérisé en ce qu'un module (TLFI) de programme de commande de vérification central a accès au module de programme de vérification.

4. Procédé de vérification suivant la revendication 1, caractérisé en ce que des données de module de programme de vérification, notamment des genres de postes d'abonné, des adresses d'origine, des critères de décision, des valeurs limites de vérification ainsi que des données d'un processeur (CP) de coordination sont mises en mémoire intermédiaire dans une mémoire (HS) d'arrière-plan.

5. Procédé de vérification suivant la revendication 1, caractérisé en ce que les critères de décision sont formés à partir de données de système dépendantes du pays de l'installation de communication ou du dispositif (EWSD) de commutation.

6. Procédé de vérification suivant la revendication 1, caractérisé en ce que les valeurs limites de vérification donnant une classification des données de valeurs de mesure de vérification peuvent être adaptées de manière spécifique aux pays dans l'installation de communication ou dans le dispositif (EWSD) de commutation commandé par programme.

7. Procédé de vérification suivant la revendication 1, caractérisé en ce que les valeurs (PG) limites de vérification, donnant une classification des données (PM) de valeurs de mesure de vérification d'un dispositif de lignes présenté de manière propre aux abonnés peuvent être prescrites de manière réglable.

8. Procédé de vérification suivant la revendication 1, caractérisé en ce que le premier module (CT) de programme de déroulement de vérification peut accéder à des données de base d'un système de communication et effectue une procédure de vérification de comparaison à des données de système provenant du module (CD) de programme de données de vérification.

9. Procédé de vérification suivant la revendication 8, caractérisé en ce que les données de base sont des données d'abonné.
